# EUROPEAN PATENT SPECIFICATION

(11) **EP 0 643 101 B1**
(45) Date of publication and mention of the grant of the patent: **12.08.1998**
(21) Application number: 94113591.5
(22) Date of filing: 31.08.1994
(51) Int. Cl.: C08L 23/28, C08K 5/47, C07D 285/125

(54) **Curing systems for halogenated elastomers**
Härtersystem für halogenierte Elastomere
Système de durcisseur pour élastomères halogenés

(30) Priority: 10.09.1993 US 119863
(43) Date of publication of application: 15.03.1995
(73) Proprietor: R.T. VANDERBILT COMPANY, Inc., Norwalk, Connecticut 06856-5150 (US)
(72) Inventor: Gardner, Irwin J., Scotch Plains, New Jersey 07076 (US); Ohm, Robert F., Monroe, Connecticut 06468 (US); Flowers, Douglas D., Houston, Texas 77502 (US); Annicelli, Ralph A., Ansonia, Connecticut 06401 (US); Hoffman, David M., Norwalk, Connecticut 06851 (US)
(74) Representative: Cohausz & Florack

(56) References cited:
- EP-A- 0 336 735
- US-A- 2 719 126
- US-A- 4 128 510
- US-A- 5 162 445

## Description

### BACKGROUND OF THE INVENTION

### Field of the Invention

The present invention relates to the use of organo polysulfide derivatives of 2,5-dimercapto-1,3,4-thiadiazole as a curative in vulcanizable elastomer systems containing halogenated elastomeric copolymers of isobutylene and isoprene or para-alkylstyrene.

### Description of the Related Art

Halogenated copolymers of isobutylene and up to about 4 mole % of isoprene (butyl rubber) are well known polymer materials whose vulcanizates offer some outstanding properties not possessed by many other diolefin based elastomers. Articles prepared from many cured halogenated elastomers offer improved resistance to oils and greases as well as resistance to oxygen and ozone degradation. Butyl rubber vulcanizates exhibit good abrasion resistance, excellent impermeability to air, water vapor and many organic solvents, as well as resistance to aging and sunlight. These properties render these materials ideal candidates for one or more applications such as water hoses, organic fluid hoses, components in tire construction, gaskets, adhesive compositions and various molded articles.

More recently, a new class of halogenated elastomeric interpolymers have been discovered which offer many of the same properties as halogenated butyl rubber, but are even more ozone and solvent resistant. These materials are the halogenation product of random copolymers of a C₄ to C₇ isoolefin, such as isobutylene, and a para-alkylstyrene comonomer wherein at least some of the alkyl substituent groups present in the styrene monomer units contain halogen.

More preferred materials are elastomeric copolymers of isobutylene and para-methylstyrene containing from about 0.5 to about 20 wt. % para-methylstyrene wherein up to about 65 % of the methyl substituent groups present on the benzene ring contain a bromine or chlorine atom, preferably a bromine atom. These copolymers have a substantially homogeneous compositional distribution such that at least 95% by weight of the polymer has a para-alkylstyrene content within 10% of the average para-alkylstyrene content of the polymer. They are also characterized by a very narrow molecular weight distribution (Mw/Mn) of less than about 5, more preferably less than about 2.5, viscosity average molecular weights in the range of from about 300,000 up to about 2,000,000, and a glass transition temperature (Tg) of below about 50°C.

These copolymers may be prepared by slurry polymerization of the monomer mixture using a Lewis Acid catalyst, followed by halogenation, preferably bromination, in solution in the presence of halogen and a radical initiator such as heat and/or light and/or a chemical initiator.

Preferred brominated copolymers generally contain from about 0.1 to about 2 mole % of bromomethyl groups, most of which is monobromomethyl, with less than 0.05 mole % dibromomethyl substituents present in the copolymer. These copolymers and their method of preparation are more particularly disclosed in United States Patent 5,162,445.

The aromatic halomethyl groups present in such copolymers permit facile crosslinking to be accomplished in a variety of ways, including by means of zinc oxide or promoted zinc oxide curing systems normally used to cure halogenated butyl rubber.

Illustrative of known accelerators or promoters which can be used in conjunction with zinc oxide for curing halogenated butyl rubber are brominated alkyl phenol resin; N,N'-diethylthiourea; di-ortho-(tolyl)guanidine salt of dicatechol borate; dipentamethylenethiuram tetrasulfide or hexasulfide; ethylene trithiocarbonate; 2-mercapto-benzothiazole; alkyl or aryl benzothiazole disulfides; tetraalkylthiuram disulfide; zinc dialkyldithiocarbamate; and alkyl phenol disulfides.

Particularly desirable features of any elastomer curing system are a combination of fast cure rate and scorch safety. Normally, a compounded elastomer composition containing the curing system will be heat processed to form shaped articles such as automotive hoses, belts or components in tire construction, and further heated to vulcanize the composition in the desired shape. The faster the rate of cure, the more productive and efficient is the manufacturing process. However, another factor which must be considered is scorch safety which may be defined as the amount of time that the compounded elastomer composition remains workable at elevated temperatures before the onset of curing occurs to a degree that the elastomer becomes unworkable.

Thus, an ideal elastomer curative is one that provides both fast, low reversion cures and maximum scorch safety time, as well as other desirable properties such as good thermal aging properties.

Many of the curatives described above provide for relatively good curing properties in halogenated elastomer systems, but relatively poor scorch safety properties.

The use of 2,5-dimercapto-1,3,4-thiadiazole (DMT) as a curing agent for certain unsaturated polymers is disclosed in British Patent 974,915. However, this material reportedly tends to lead to premature crosslinking (scorch) when used as a curative in systems containing halogenated elastomers. Monosulfide derivatives of DMT or bis-and polybis-DMT derivatives are disclosed in US Patent 4,128,510 to be effective curatives for halogenated elastomers when used in combination with basic salts or oxides. Suitable such derivatives include alcohol, ether and ester derivatives such as monobenzoate, monoacetate and bis-oxylate, as well as bis-salts. While these materials reportedly have improved scorch properties in comparison with unmodified DMT, other properties such as rate of cure, thermal aging, elongation and tensile strength may suffer due to the adverse effect of curing systems containing these DMT derivatives on these properties. Similar compounds are disclosed in US Patent 4,978,703 as curing agents for chlorinated polyethylene compositipns.

### SUMMARY OF THE INVENTION

The present invention provides an improved curing system for elastomer compositions containing halogenated elastomers, as well as blends thereof with more highly unsaturated elastomers.

The curable compositions comprise a mixture of a halogenated elastomer selected from the group consisting of chlorinated or brominated butyl rubber, chlorinated or brominated interpolymers of a C₄ to C₇ isoolefin and a para-alkylstyrene comonomer and mixtures thereof, and a curing agent comprising an organo polysulfide derivative of 2,5-dimercapto-1,3,4-thiadiazole or mixtures of such derivatives having the formula: 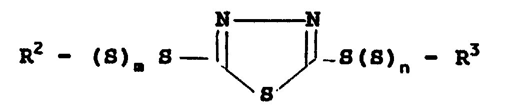 wherein R² and R³ are the same or different hydrocarbon radicals containing from 2 to 30 carbon atoms, more preferably from 4 to 16 carbon atoms, m and n are numbers from 1 to 8, the sum of m and n being at least 2, and preferably from 4 to 12.

The curing agents of the present invention provide for fast cure and low revision cures in the elastomer systems in which they are used, along with enhanced scorch safety, good vulcanizate aging properties, good elongation and tensile properties and improved adhesion of the shaped elastomer composition to itself or other selected elastomers.

### DETAILED DESCRIPTION OF THE INVENTION

The halogenated elastomer present in the curable compositions of this invention may include chlorinated or brominated butyl rubber, chlorinated or brominated interpolymers of a C₄ to C₇ isolefin and a para-alkylstyrene, mixtures thereof or mixtures of one or both of these elastomers with other elastomers such as polybutadienes, copolymers of butadiene with styrene or acrylonitrile, natural rubber, synthetic polyisoprene, non-halogenated butyl rubber or elastomeric copolymers of ethylene, propylene and up to 10 mole% of a non-conjugated diene (known as EPDM rubbers).

The preferred halobutyl rubbers are based on chlorinated or brominated copolymers of isobutylene with from 0.5 to about 4 mole % of isoprene. These elastomers generally have a number average molecular weight within the range of about 50,000 up to about 500,000 and may be prepared by polymerization and halogenation methods well known in the art such as disclosed in U.S. Patents 2,940,960 and 3,099,644.

Halogenated interpolymers based on a C₄ to C₇ isoolefin, such as isobutylene, and a para-alkylstyrene, such as para-methylstyrene, are also now known in the art as evidenced by the aforementioned U. S. Patent 5,162,445. These elastomers are inclusive of those described in the background section of this disclosure.

Preferred materials are the halogenation product of a random copolymer of a C₄ to C₇ isoolefin, such as isobutylene, and a para-alkylstyrene comonomer wherein at least some of the alkyl substituent groups present in the styrene monomer units contain halogen. Preferred materials may be characterized as isobutylene interpolymers containing the following monomer units randomly spaced along the polymer chains: 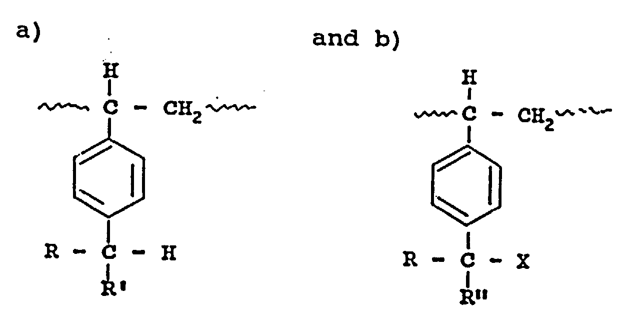 wherein at least 5 % of the comonomer units present in the polymer chain are of the structure of formula b, R and R' are independently hydrogen or C₁ to C₄ alkyl, R'' is independently hydrogen, C₁ to C₄ alkyl or X, and X is bromine or chlorine, and wherein the interpolymer is otherwise substantially free of any halogen in the polymer backbone chain.

With reference isobutylene as the isoolefin comonomer, these interpolymers are inclusive of:
a) copolymers consisting of isobutylene and a monomer having the structure of formula b wherein R'' is hydrogen or C₁ to C₄ alkyl, eg, copolymers of isobutylene and a monohalo-substituted para-alkylstyrene;
b) terpolymers comprising isobutylene and a mixture of monomers having the structure of formulas a and b wherein R'' is hydrogen or C₁ to C₄ alkyl, eg, terpolymers of isobutylene, a para-alkylstyrene and a monohalo-substituted para-alkylstyrene;
c) terpolymers comprising isobutylene and a mixture of monomers having the structure of formula b wherein, with respect to a major proportion of the formula b monomer, R'' is hydrogen or C₁ to C₄ alkyl and, with respect to a minor proportion of said formula b monomer, R'' is bromine or chlorine, eg, terpolymers of isobutylene, a mono-halo substituted para-alkylstyrene and a di-halo substituted para-alkylstyrene; and
d) tetrapolymers comprising isobutylene and a mixture of monomers having the structure of formulas a and b wherein, with respect to major proportion of the formula b monomer, R'' is hydrogen or C₁ to C₄ alkyl and, with respect to a minor proportion of said formula b monomer, R'' is bromine or chlorine, eg, tetrapolymers of isobutylene, a para-alkylstyrene, amonohalo-substituted para-alkylstyrene and a dihalo-substituted para-alkylstyrene.

As stated above, these halogenated interpolymers are prepared using a copolymer of a C₄ to C₇ isoolefin and a para-alkylstyrene as the halogenation substrate. Interpolymers having the composition (a), (b), (c) or (d) above will be produced as a function of the severity of the halogenation reaction. For example, mild halogenation will tend to yield interpolymers of the characteristics of (b), stronger halogenation will yield interpolymers of the characteristics of (a) or (d) and the strongest halogenation will yield terpolymers having the characteristics of (c).

The most preferred elastomers used in the compositions of the present invention are random elastomeric brominated terpolymers comprising isobutylene and para-methylstyrene (PMS) containing from 0.5 to 20 wt% PMS, more preferably from 2 to 15 wt% PMS, wherein 5 to about 65% of the PMS monomer units contain a mono-bromomethyl group. These elastomeric copolymers generally exhibit a number average molecular weight in the range of from about 50,000 to about 250,000, more preferably from about 80,000 to about 180,000. From 5 up to 65% of the total PMS monomer content of the terpolymer contains a mono-bromomethyl group with essentially no bromination occurring in the polymer backbone or in the aromatic ring. The bromine content of these terpolymers generally ranges from 0.1 to 5 mole%.

An advantage of elastomer compositions containing halogenated butyl rubber, or particularly, halogenated isobutylene - PMS interpolymers is that they may be more readily covulcanized with other general purpose elastomers such as polybutadiene, butadiene/styrene copolymers and natural rubber as well as EPDM elastomers. This characteristic is due primarily to the fact that these halogenated materials can be made to co-cure with more highly unsaturated rubber by mechanisms which are independent of the sulfur and promoted sulfur systems used to cure the more highly unsaturated elastomers.

The organopolysulfide derivatives of 2,5-dimercapto-1,3,4-thiadiazole which are useful as curing agents or curing accelerators in accordance with the present invention are normally liquid or oily materials as described by the formula set forth above. The compounds are not novel per se since compounds within the scope of this formula are described in U.S. Patents 2,719,125 and 2,719,126 to be useful as additives for lubricants to inhibit corrosion. They are also disclosed in U.S. Patent 3,609,079 as additives for silicone-based oils to enhance the lubrication properties of the oil.

The derivatives in accordance with the present invention are those having the formula: 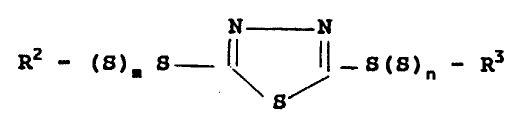 wherein R² and R³ are the same or different aliphatic, cycloalphatic or aromatic hydrocarbon radicals, including alkyl, aralkyl, aryl and alkaryl radicals, as well as mixtures thereof, and m and n are as described above. The acyclic radicals may contain from 2 to 30 carbon atoms, more preferably from 4 to 16 carbon atoms. Examples of suitable hydrocarbon radicals include linear or branched alkyl radicals such as ethyl, propyl, butyl, isobutyl, hexyl, octyl, nonyl, decyl, dodecyl, tridecyl and octadecyl, as well as cyclic radicals such as cyclohexyl, phenyl, tolyl, benzyl, styryl and napthyl. In the more preferred embodiment of the invention, R² and R³ are the same alkyl groups and each contain from 4 to 16 carbon atoms.

Also in the preferred embodiment, m and n are identical integers ranging from 2 to 6 such that the sum of m and n ranges from 4 to 12. In the most preferred embodiment of the invention m = n = 2 or 3, and R² = R³ = C₆ to C₁₀ alkyl. Most preferably m.= n = 2. The herein-described polysulfide derivatives of 2,5-dimercapto-1,3,4-thiadiazole can be suitably prepared by several methods. For example, they can be prepared by reacting 2,5-dimercapto-1,3,4-thiadiazole with a suitable sulfenyl chloride, or by reacting the dimercaptan with chlorine and reacting the resultant disulfenyl chloride with a primary or tertiary mercaptan. Bis-trisulfide derivatives are obtained by reacting the dimercaptan with a mercaptan and a sulfur chloride in molar ratios of from 1:2:2 to 1:2:4 at a temperature of from about 50-100°C. Higher polysulfides can be prepared by reacting the thiadiazole di- or trisulfides with sulfur at temperatures of about 93-204°C. Another method of preparing the polysulfides of the present invention involves reacting 2,5-dimercapto-1,3,4-thiadiazole with a mercaptan and sulfur in the molar ratio of from 1:1:1 to 1:4:16 at temperatures of from about 75°C to about 150°C. Some of these methods actually yield mixtures of polysulfides, particularly where the polysulfide derivatives are prepared by sulfurization of 2,5-dimercapto-1,3,4 thiadiazoles, as confirmed by high performance liquid chromatography (HPLC).

A more comprehensive disclosure of these compounds and their method of synthesis is found in U.S. Patent 2,719,126.

The organopolysulfides of this invention may be incorporated into the elastomer composition in their concentrated pure liquid form or they may be mixed with one or more diluents to form a more dilute liquid. They may also be absorbed onto the surface of finely divided, inert carrier to provide a curing powder.

Suitable diluents include aromatic, naphthenic and paraffinic hydrocarbon oils; alkyl esters of dibasic acids, e.g., dioctyl phthalate, dioctyl sebacate, dioctyl adipate, diisodecyl glutarate, dioctyl azolate; alkyl sulfides; fatty acid esters, e.g., butyl oleate, butyl stearate, octyl epoxy tallate, trioctyl trimellitate; polyester plasticizers, e.g., polymeric di(butoxy-ethoxy-ethyl) adipate, polymer of bis(ethyleneoxy) methane with disulfide linkages (LP-31 manufactured by Morton International); petroleum sulfonates; alkyl trimellitates; and polymeric esters.

Suitable finely divided carrier materials include carbon black; metal oxides, such as aluminum oxide; alumina; silica; mineral fillers such as clay, talc and bentonite; aluminosilicates; zeolites and similar carriers. The most preferred carriers are non-basic since basic carriers such as calcium silicate can have an adverse influence on curing properties.

Preferred carriers have a surface area of from about 75 to about 300 m²/g. A particularly preferred carrier is amorphous silica available from Pittsburgh Plate Glass Company under the trade name HISIL^{R}233 and HISIL^{R}ABS.

When mixed with a liquid diluent or finely divided carrier, the mixing ratios may vary between about 15 to 85% by weight the organopolysulfide with the balance being the diluent or carrier. Preferred mixing ratios lie in the 30-70% by weight range.

The quantity of the organopolysulfide active ingredient effective to cure the halogenated elastomer composition will vary as a function of the halogen content of the elastomer. Generally, it is employed in the range of from 0.1 to 3 parts by weight per 100 parts by weight of halogenated elastomer present in the curable composition, more preferably in the range of 0.1 to 1.5 parts by weight per 100 parts by weight of halogenated elastomer. Where the organopolysulfide is diluted or combined with a finely divided carrier, higher levels of the resulting material may be used to provide the required level of active ingredient.

The organopolysulfides are preferably used as cocuratives in curing systems also containing zinc oxide or an equivalent thereof, e.g., zinc chloride, zinc bromide or ferric chloride, as the primary curative agent. Zinc oxide is normally used in such systems at a level of from 0.2 to 7 parts by weight per 100 parts by weight of halogenated elastomer. The present invention provides for particularly good low cure reversion where zinc oxide is present at relatively low levels in the range of from 0.2 to 2.5 parts by weight per 100 parts by weight of halogenated elastomer.

The compositions of this invention may also contain a blend of the halogenated elastomers with one or a mixture of other elastomers such as natural rubber, polyisoprene, polybutadiene, copolymers of butadiene with styrene or acrylonitrile, EPDM elastomers and butyl rubber. Such blends may contain from 10 to 90% by weight of each type of elastomer, more preferably from 25 to 75% by weight, based on the elastomer content of the blend. The most preferred blends are those containing the halogenated elastomer at levels of from 25 to 75% by weight. When making such blends, sulfur or other well known sulfur-containing curatives for unsaturated elastomers may be included in the composition.

Examples of such compounds are sulfur, benzothiazyl disulfide, N-oxydiethylene benzothiazole-2-sulfenamide, 2-mercaptobenzothiazole, alkyl phenol disulfides, tetramethylthiuram disulfide, m-phenylenebismaleimide, N,N¹-diarylguanidines, and like known materials.

The vulcanizable composition may also contain other conventional additives known in the art, including fillers such as carbon black or silica, stabilizers, antioxidants, plasticizers, processing oils, pigments, flame retardants, blowing agents and like additives as are known in the art.

The vulcanizable composition may be prepared and blended using any suitable mixing device such as a two-roll mill, an internal mixer (Brabender Plasticorder), a Banbury Mixer, a kneader or a similar mixing device. Blending temperatures and times may range about 15° to 180°C and from about 1 to 10 minutes respectively. After forming a homogeneous mixture of the halogenated elastomer and the optional fillers and the processing aids, the mixture is then prepared for vulcanization by the further incorporation of the curing system of this invention in the mixing device or on a separate mixing device such as a two roll mill, after which the mixture is sheeted out, further processed and vulcanized as is well known in the art.

The following examples are illustrative of the invention. The materials used in preparing the various formulations as abbreviated in the Tables were as follows:

| | |
|---|---|
| EMDX 90-3 | Random brominated copolymer of isobutylene and para-methylstyrene containing 5 wt% of paramethylstyrene, 0.8 wt% bromine (0.5 mole %), 0.07 wt% calcium (as calcium stearate) 0.04 wt% phenolic antioxidant and having a Mooney Viscosity ML (1+8) at 125°C of 55±5. |
| | |
| EMDX 90-10 | Random brominated copolymer of isobutylene and para-methylstyrene containing 7.5 wt% of paramethylstyrene, 2.0 wt% bromine (1.2 mole%), 0.07 calcium (as calcium stearate), 0.04 wt% phenolic antioxidant and having a Mooney Viscosity ML (1+8) at 1.25° of 45±5. |
| | |
| BrB - 2244 | Exxon Bromobutyl, random brominated copolymer of 98 mole% isobutylene and 2 mole % isoprene, 2.1 ± 0.2 wt% bromine and having a Mooney Viscosity ML (1+8) at 125°C of 46 ± 5. |
| | |
| ClB - 1068 | Exxon Chlorobutyl, random chlorinated copolymer of isobutylene and isoprene, 1.26 ± 0.08 wt% chlorine and having a Mooney Viscosity ML(1 + 8) at 125°C of 50 ± 5. |
| | |
| BD - 1207 | Budene R polybutandiene rubber, manufactured by Goodyear Tire and Rubber Co. Mooney Viscosity ML (1+8) at 125°C of 55±5. |
| | |
| SMR - 20 | Standard Malyasion natural rubber. |
| | |
| IRB #6CB | Reinforcing grade carbon black. |
| | |
| N220 - CB | Reinforcing grade carbon black. |
| | |
| N660 - CB | Reinforcing grade carbon black. |
| | |
| Curative A | 2,5-bis (octyltrithio)-1,3,4-thiadiazole, prepared according to Example A. |
| | |
| Curative B | Curative A, diluted to about 70% by weight concentration with inert polyalkyldisulfide diluent. |
| | |
| Curative C | Curative B, mixed with 30% by weight amorphous silica. |
| | |
| SP - 1045 | Alkylphenol/formaldehyde resin (Schenectady Chemicals). |
| TEG | Triethylene glycol. |
| | |
| MBTS | 2-mercaptobenzothiazyl disulfide. |
| | |
| Flexon™ 641 | Naphthenic mineral oil (Exxon Company). |
| | |
| Strucktol™ 40MS | Alkylated naphthenic/aromatic hydrocarbon resin (Strucktol Company). |
| | |
| Escorez™ 1102 | Petroleum based resin (Exxon Chemical Company). |
| | |
| Vultac #5 | Alkyl phenol disulfide (Pennwalt Corporation). |
| | |
| DPG | N,N'-Diphenyl guanidine. |

### Example A

A reactor was charged with 2,5-bis (octyldithio)-1,3,4-thiadiazole (17.5 g), di-n-octyl disulfide (7.5g) and sulfur (2.55 g). The reaction mixture was heated at 130°C for two hours. The product was a yellow liquid. The percent of conversion to the 2,5-bis (octyltrithio)-1,3,4-thiadiazole derivative was estimated to be 30-40 percent based on HPLC analysis.

### Examples 1-6

The brominated polymer described above as EMDX 90-3 was compounded, vulcanized and evaluated for curing activity and vulcanizate properties. A series of six formulations (Examples 1-6) as described in Table 1 were prepared by first compounding 100 parts by weight of the brominated polymer, the indicated parts by weight of the reinforcing carbon black and the indicated amount in parts by weight of stearic acid on a laboratory two roll mill at about 25°C for about 10 minutes. Portions of this master batch were then formulated with a curative mixture of zinc oxide and the other curatives as shown in Table 1 by adding the curative mixture to the rubber stock and milling the mixture on a two roll mill at 25°C for about 5 minutes.

The curable mixtures were evaluated for vulcanization activity according to ASTM D-2084 using a Monsanto Oscillating Disc Rheometer and then physical properties of the vulcanizates were evaluated by vulcanizing test pads under the various cure conditions set forth in Table 1 using standard ASTM laboratory test practice as follows:
Mooney Viscosity - ASTM D-1646
Mooney Scorch _ ASTM D-1646
Tensile Properties * - ASTM D-3182 through D-3192
Tensile Properties ** - ASTM D-412

* Covers mixing conditions and curing.
**Covers tension testing and tensile properties.

The test data in Table 1 demonstrates that the relatively pure form of 2,5-bis(octyltrithio)-1,3,4-thiadiazole is an effective curative for compositions containing brominated isobutylene-para-methylstyrene elastomer.

Example 1 shows a control ZnO, zinc stearate and stearic acid curing system and Example 2 shows the same system containing the organopolysulfide cure accelerator. Inclusion of the curative provides a cure system with very good Mooney scorch behavior, a good rate of cure and excellent tensile/elongation properties before and after aging as compared to Example 1.

Example 3 shows a control tire bladder formulation based on ZnO, stearic acid and resin curative. Example 4 shows the same system also containing the organopolysulfide cure accelerator. Inclusion of the curative produces shorter scorch times at t3, t5 and t10 minutes than the control and improved tensile properties after aging.

Example 5 shows a control formulation based on ZnO and stearic acid. Example 6 shows the same formulation also containing the organopolysulfide cure accelerator. The formulation of Example 5 does not yield a practical cure rate as reflected by MH-ML data, whereas the formulation of Example 6 exhibits a markedly enhanced cure rate and improved tensile properties.

### Examples 7-12

Examples 7-12 demonstrate that the organopolysulfides of this invention are effective curatives for compositions based on Bromo- and Chlorobutyl elastomers. Formulations as identified in Table 2 were mixed and processed as described in Examples 1-6 and properties were evaluated.

The data in Table 2 shows that the organopolysulfides of this invention are effective curatives for both Bromo- and Chlorobutyl rubber as evidenced by MH-ML values.

### Examples 13-22

The following examples demonstrate that the organopolysulfide curing agents of this invention are an effective curative in elastomer formulations based on a mixture of halogenated isobutylene-para-methylstyrene copolymer and other more highly unsaturated rubbers.

An elastomer masterbatch suitable for automotive tire sidewall applications was prepared by forming a mixture of the following composition in parts by weight:

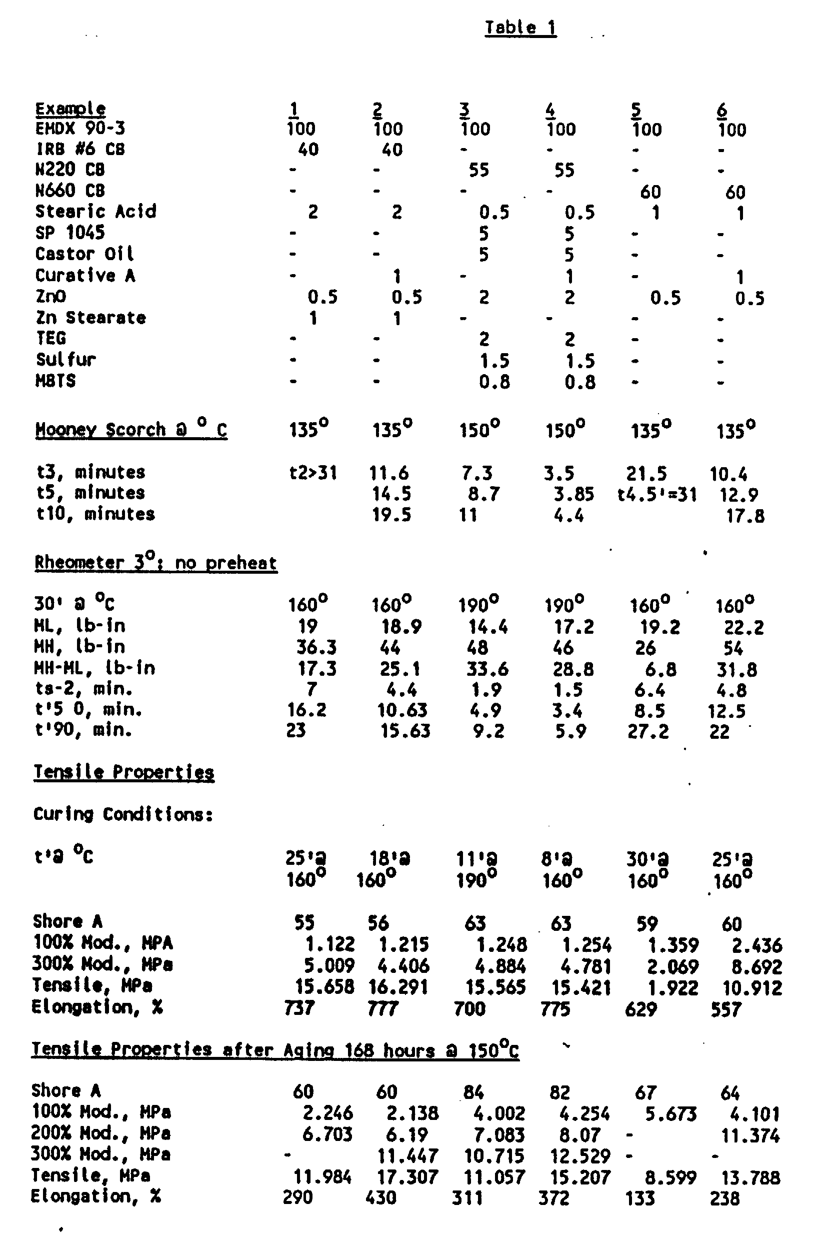

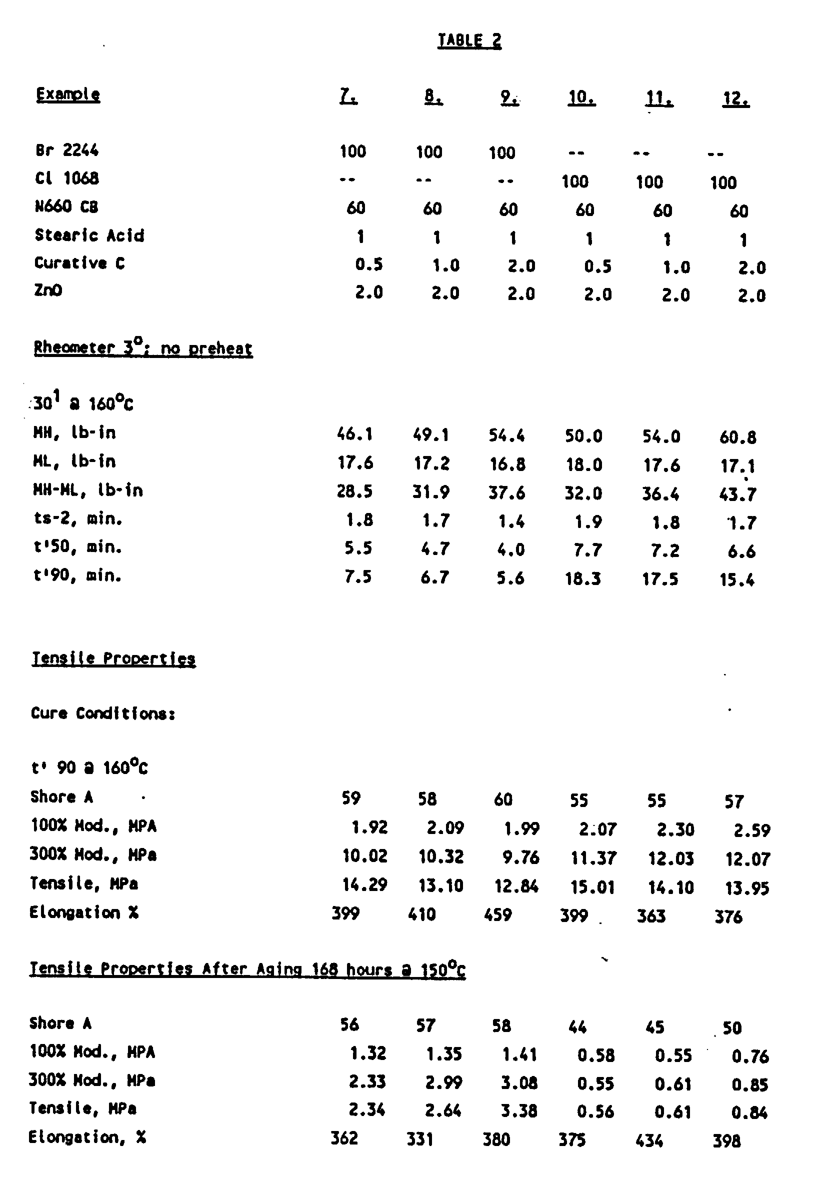

| | |
|---|---|
| EMDX 90-10 | 40 |
| BD-1207 | 50 |
| SMR-20 | 10 |
| N-660 CB | 50 |
| Flexon^{R}641 | 12 |
| Struktol^{R}40 MS | 5 |
| Escorez^{R}1102 | 5 |
| Stearic acid | 0.5 |
| MBTS | 1.75 |
| ZnO | 1.0 |

All ingredients except for the MBTS and ZnO were compounded on a two roll mill at about 25°C for about 10 minutes. Subsequently, the MBTS, ZnO and other curatives as shown in Tables 3 and 4 were added to eleven different portions of this masterbatch and milling was continued at 25°C for an additional 5 minutes. Properties of the cured vulcanizates are shown in Tables 3 and 4.

The data in Tables 3 and 4 demonstrate that polyblend formulations containing the organopolysulfides of the present invention exhibit much improved scorch safety in comparison with the control formulation of Example 13 which contains a conventional accelerator such as Vultac #5. Most formulations also exhibit a faster cure rate than the control formulation.

It was also observed that adhesion peel composites made from the compositions of Examples 14-22 and cured at 170°C exhibited generally superior adhesion to themselves and to general purpose rubber carcass material than similar composites made from the composition of control Example 13.

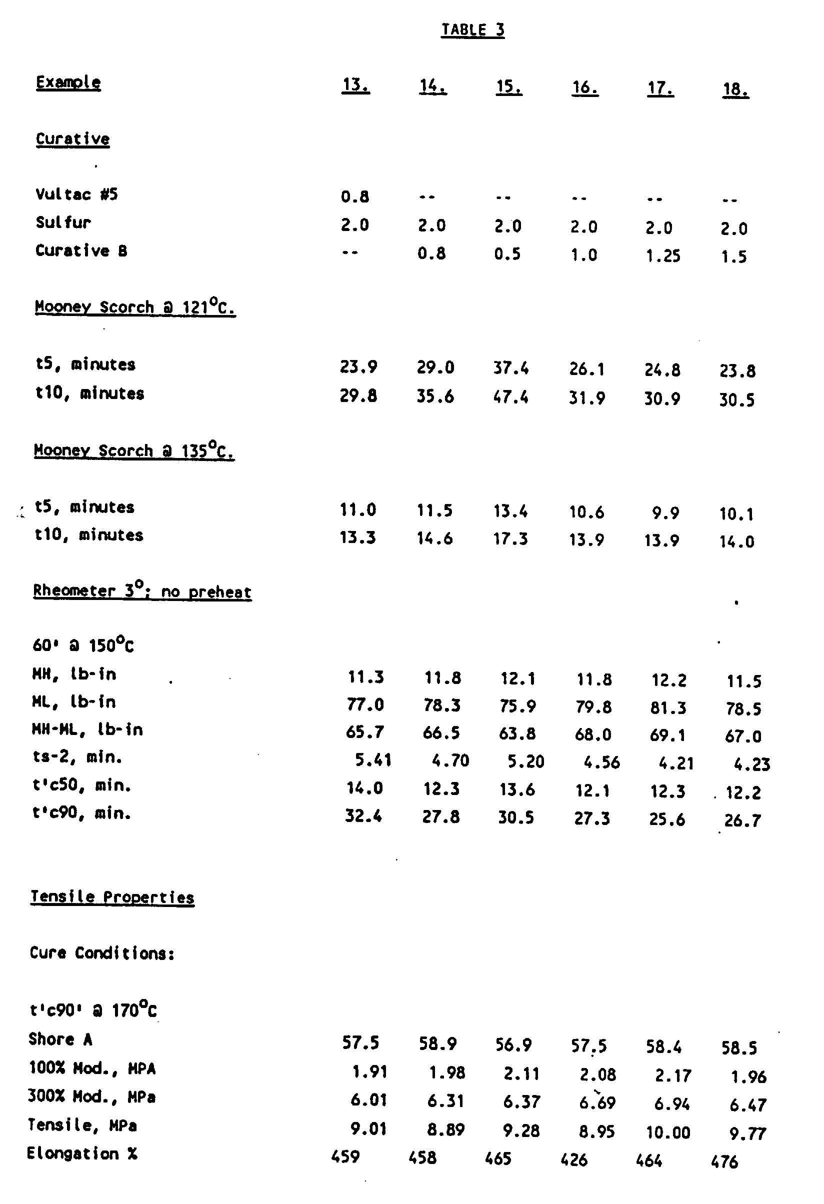

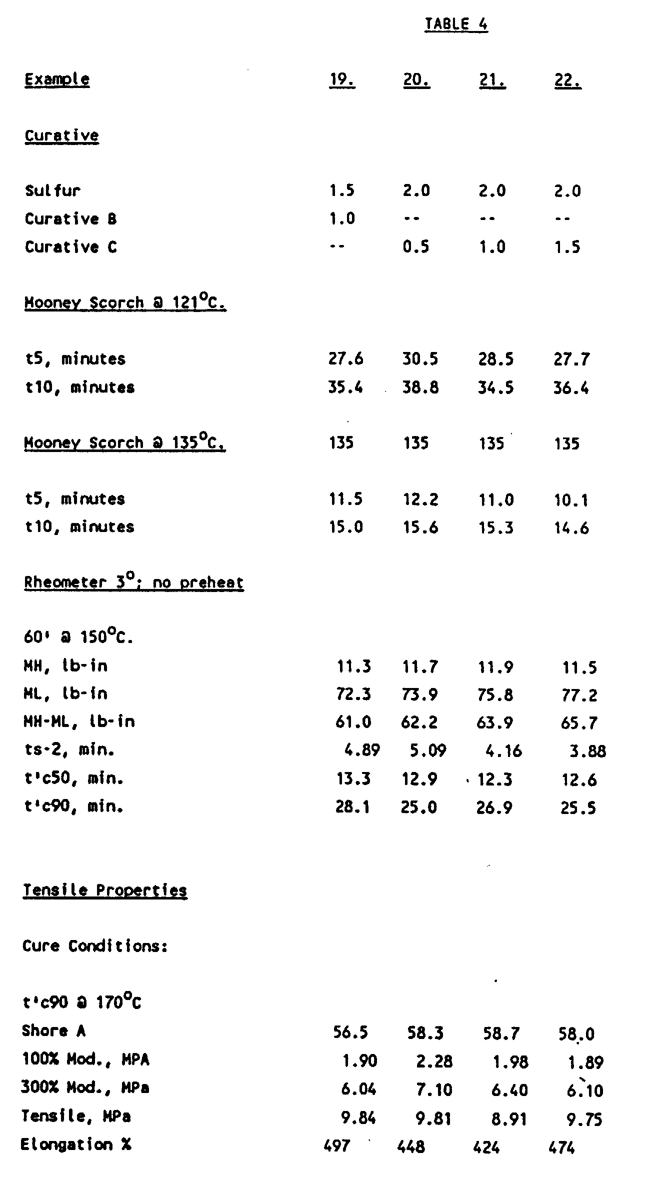

## Claims

1. A curable composition comprising a mixture of a halogenated elastomer selected from the group consisting of chlorinated or brominated butyl rubber, chlorinated or brominated interpolymers of a C₄ to C₇ isoolefin and a para-alkylstyrene comonomer and mixtures thereof, and an organopolysulfide derivative of 2,5-dimercapto-1,3,4-thiadiazole or mixtures of such derivatives having the formula: 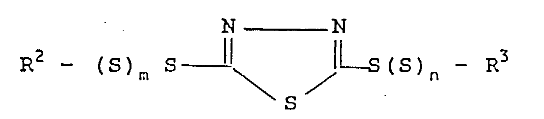 wherein R² and R³ are the same or different hydrocarbon radicals containing from 2 to 30 carbon atoms and m and n are numbers of from 1 to 8, the sum of m and n being at least 2, said organopolysulfide being present in said composition in an amount effective to cure said composition upon the application of heat.

2. The composition of claim 1 wherein said organopolysulfide is present in said composition at a level in the range of from 0.1 to 3 parts by weight per 100 parts by weight of said halogenated elastomer.

3. The composition of claim 2 wherein said organopolysulfide is present in said composition at a level in the range of from 0.1 to 1.5 parts by weight per 100 parts by weight of said elastomer.

4. The composition of claim 1 wherein said organopolysulfide is present in said composition absorbed on the surface of a finely divided, inert carrier material.

5. The composition of claim 1 wherein R² and R³ are alkyl groups each containing from 4 to 16 carbon atoms.

6. The composition of claim 1 wherein m = n = 2 or 3.

7. The composition of claim 6 wherein R² = R³ = C₆ to C₁₀ alkyl.

8. The composition of claim 7 wherein m = n = 2.

9. The composition of claim 2 further containing zinc oxide in an amount effective to co-cure said composition.

10. The composition of claim 2 wherein said halogenated elastomer is a brominated elastomer.

11. The composition of claim 2 which further contains an unsaturated elastomer selected from the group consisting of polybutadiene, copolymers of butadiene with styrene or acrylonitrile, non-halogenated butyl rubber, polyisoprene, natural rubber, EPDM rubber and mixtures thereof.

12. The composition of claim 11 which additionally contains sulfur or a sulfur-containing curative for said unsaturated elastomer.

13. The composition of claim 1 wherein said halogenated elastomer is halogenated copolymer of a C₄ to C₇ isoolefin copolymerized with a para-alkylstyrene, said copolymer containing from 0.5 to 20 weight% of paraalkylstyrene monomer units of the following structure randomly distributed therein: 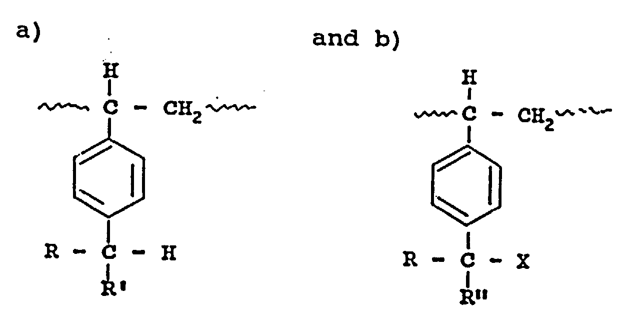 wherein R and R' are independently selected from the group consisting of hydrogen and C₁ to C₄ alkyl, R" is independently selected from the group consisting of hydrogen, C₁ to C₄ alkyl and X, and X is bromine or chlorine and wherein the copolymer is substantially free of ring halogen and free of halogen present in the polymer backbone chain, and wherein at least 5 weight percent of the monomer units present in the copolymer are of structure (b).

14. The composition of claim 13 wherein said halogenated copolymer is a terpolymer of isobutylene, para-methylstyrene and monobromo-para-methylstyrene.

15. The composition of claim 14 wherein from 5 to 65% of the para-methylstyrene monomer units contain a mono-bromomethyl group.

16. The composition of claim 15 wherein said terpolymer has a bromine content in the range of from 0.1 to 5 mole%.

17. The composition of claim 1 further containing a reinforcing grade carbon black filler.

18. A method for preparing a vulcanized composition comprising heating the composition of claim 1 mixed with zinc oxide at a temperature and for a period of time sufficient to cure said composition.

19. A method for preparing a vulcanized composition comprising heating the composition of claim 11 mixed with zinc oxide and a curative for said unsaturated elastomer at a temperature and for a period of time sufficient to cure said composition.

## Patentansprüche

1. Härtbare Zusammensetzung, die ein Gemisch aus einem halogenierten Elastomer, ausgewählt aus der Gruppe, bestehend aus chlorierten oder bromierten Butylkautschuk, chlorierten oder bromierten Mischpolymeren eines C₄ bis C₇-Isoolefins und eines para-Alalkylstyrolcomonomeren und Mischungen hieraus und einem Organopolysulfidderivat von 2,5-Dimercapto-1,3,4-thiadiazol oder Mischungen aus solchen Derivaten mit der Formel 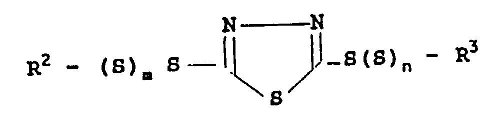 enthält, worin R² und R³ gleiche oder unterschiedliche Kohlenwasserstoffradikale mit 2 bis 30 Kohlenstoffatomen und m und n Zahlen von 1 bis 8 sind, wobei die Summe von m und n mindestens 2 beträgt und das Organopolysulfid in einer zum Härten der Zusammensetzung durch die Anwendung von Hitze wirksamen Menge zugegen ist.

2. Zusammensetzung nach Anspruch 1, worin das Organopolysulfid in der Zusammensetzung in einer Menge von 0,1 bis 3 Gewichtsteilen, bezogen auf 100 Gewichtsteile des halogenierten Elastomers, zugegen ist.

3. Zusammensetzung nach Anspruch 2, worin das Organopolysulfid in der Zusammensetzung in einer Menge von 0,1 bis 1,5 Gewichtsteilen, bezogen auf 100 Gewichtsteile des Elastomers, zugegen ist.

4. Zusammensetzung nach Anspruch 1, worin das Organopolysulfid in der Zusammensetzung adsorbiert auf der Oberfläche eines fein zerteilten inerten Trägermaterials zugegen ist.

5. Zusammensetzung nach Anspruch 1, worin R² und R³ Alkylgruppen sind, die jeweils 4 bis 16 Kohlenstoffatome enthalten.

6. Zusammensetzung nach Anspruch 1, worin m = n = 2 oder 3 ist.

7. Zusammensetzung nach Anspruch 6, worin R² = R³ = C₆ bis C₁₀-Alkyl ist.

8. Zusammensetzung nach Anspruch 7, worin m = n = 2 ist.

9. Zusammensetzung nach Anspruch 2, die weiterhin Zinkoxid in einer zum gemeinsamen Härten der Zusammensetzung wirksamen Menge enthält.

10. Zusammensetzung nach Anspruch 2, worin das halogenierte Elastomer ein bromiertes Elastomer ist.

11. Zusammensetzung nach Anspruch 2, die ferner ein ungesättigtes Elastomer, ausgewählt aus der Gruppe, bestehend aus Polybutadien, Copolymeren von Butadien mit Styrol oder Acrylnitril, nicht halogeniertem Butylkautschuk, Polyisopren, natürlichen Kautschuk, EPDM-Kautschuk und Gemische hieraus enthält.

12. Zusammensetzung nach Anspruch 11, die zusätzlich Schwefel oder einen schwefelhaltigen Härter für das ungesättigte Elastomer enthält.

13. Zusammensetzung nach Anspruch 1, worin das halogenierte Elastomer ein halogeniertes Copolymer eines C₄ bis C₇-Isoolefins ist, welches mit para-Alkylstyrol copolymerisiert ist, wobei das Copolymer 0,5 bis 20 Gew.% para-Alkylstyrolmonomereinheiten der folgenden Struktur enthält: 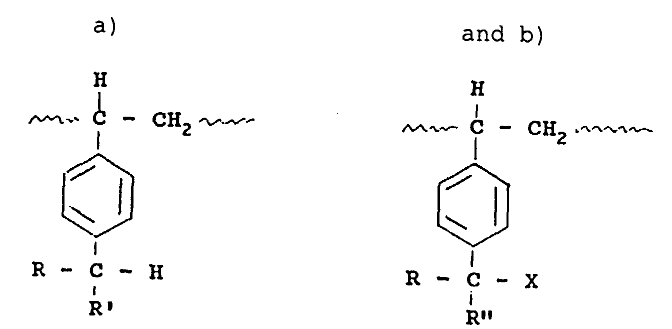 wobei die Monomereinheiten willkürlich in dem Copolymer verteilt sind und worin R und R' unabhängig voneinander aus der Gruppe ausgewählt sind, die aus Wasserstoff und C₁ bis C₄-Alkyl besteht, R" unabhängig aus der Gruppe, bestehend aus Wasserstoff, C₁ bis C₄-Alkyl und X, ausgewählt ist, wobei X Brom oder Chlor ist und worin das Copolymer an den Ringen sowie in der Rückgradkette des Polymers im wesentlichen frei von Halogenatomen ist und worin mindestens 5 Gew.% der in dem Copolymer vorhandenen Monomereinheiten die Struktur (b) aufweisen.

14. Zusammensetzung nach Anspruch 13, worin das halogenierte Copolymer ein Terpolymer aus Isobutylen, para-Methylstyrol und Monobromparamethylstyrol ist.

15. Zusammensetzung nach Anspruch 14, worin 5 bis 65% der para-Methylstyrolmonomereinheiten eine Monobrommethylgruppe enthalten.

16. Zusammensetzung nach Anspruch 15, worin das Terpolymer einen Bromgehalt im Bereich von 0,1 bis 5 Mol% aufweist.

17. Zusammensetzung nach Anspruch 1, die ferner Ruß als Füllmittel in einer verstärkenden Qualität enthält.

18. Verfahren zur Herstellung einer vulkanisierten Zusammensetzung, welches das Erwärmen der mit Zinkoxid vermischten Zusammensetzung nach Anspruch 1 bei einer zum Härten der Zusammensetzung ausreichenden Temperatur und Dauer umfaßt.

19. Verfahren zur Herstellung einer vulkanisierten Zusammensetzung, welches das Erwärmen der mit Zinkoxid und einem Härter für das ungesättigte Elastomer vermischten Zusammensetzung nach Anspruch 11 bei einer zum Härten der Zusammensetzung ausreichenden Temperatur und Dauer umfaßt.

## Revendications

1. Composition durcissable comprenant un mélange d'un élastomère, halogéné choisi dans le groupe formé du caoutchouc butyle chloré ou bromé, des interpolymères chlorés ou bromés d'une iso-oléfine en C₄ à C₇ et d'un comonomère de paraalkylstyrène et de leurs mélanges, et d'un dérivé organopolysulfuré du 2,5-dimercapto-1,3,4-thiadiazole ou des mélanges de ces dérivés, ayant la formule: 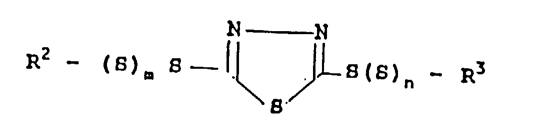 dans laquelle R² et R³ sont des radicaux hydrocarbure identiques ou différents contenant de 2 à 30 atomes de carbone et m et n sont des nombres allant de 1 à 8, la somme de m et n étant égale au moins à 2, ledit organopolysulfure étant présent dans la composition en quantité efficace pour durcir ladite composition lors de l'application de chaleur.

2. Composition selon la revendication 1, dans laquelle ledit organopolysulfure est présent dans ladite composition à une teneur comprise dans l'intervalle allant de 0,1 à 3 parties en poids pour 100 parties en poids dudit élastomère halogéné.

3. Composition selon la revendication 2, dans laquelle ledit organopolysulfure est présent dans ladite composition à une teneur comprise dans l'intervalle allant de 0,1 à 1,5 partie en poids pour 100 parties en poids dudit élastomère.

4. Composition selon la revendication 1, dans laquelle ledit organopolysulfure est présent dans ladite composition, absorbé sur la surface d'un matériau support inerte finement divisé.

5. Composition selon la revendication 1, dans laquelle R² et R³ sont des groupes alkyle contenant chacun de 4 à 16 atomes de carbone.

6. Composition selon la revendication 1, dans laquelle m = n = 2 ou 3.

7. Composition selon la revendication 6, dans laquelle R² = R³ = un alkyle en C₆ à C₁₀.

8. Composition selon la revendication 7, dans laquelle m = n = 2.

9. Composition selon la revendication 2, contenant en outre de l'oxyde de zinc en quantité efficace pour codurcir ladite composition.

10. Composition selon la revendication 2, dans laquelle ledit élastomère halogéné est un élastomère bromé.

11. Composition selon la revendication 2, contenant en outre un élastomère insaturé choisi dans le groupe formé du polybutadiène, des copolymères du butadiène avec le styrène ou l'acrylonitrile, du caoutchouc butyle non halogéné, du polyisoprène, du caoutchouc naturel, du caoutchouc EPDM et de leurs mélanges.

12. Composition selon la revendication 11, contenant en outre du soufre ou un agent de durcissement soufré pour ledit élastomère insaturé.

13. Composition selon la revendication 1, dans laquelle ledit élastomère halogéné est un copolymère halogéné d'une iso-oléfine en C₄ à C₇ copolymérisée avec le para-alkylstyrène, ledit copolymère contenant de 0,5 à 20% en poids d'unités monomères de para-alkylstyrène ayant les structures suivantes, distribuées statistiquement: 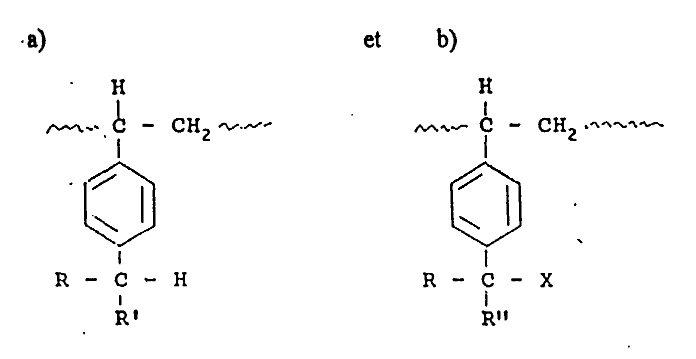 dans lesquelles R et R' sont choisis indépendamment dans le groupe formé de l'hydrogène et d'un alkyle en C₁ à C₄, R" est choisi indépendamment dans le groupe constitué de l'hydrogène, d'un alkyle en C₁ à C₄ et de X, et X est un atome de brome ou de chlore et dans lequel le copolymère est essentiellement exempt d'halogène dans le cycle et est exempt d'halogène présent dans la chaîne du squelette du polymère et dans lequel au moins 5% en poids des unités monomères présentes dans le copolymère ont la structure (b).

14. Composition selon la revendication 13, dans laquelle ledit copolymère halogéné est un terpolymère de l'isobutylène, du para-méthylstyrène et du monobromopara-méthylstyrène.

15. Composition selon la revendication 14, dans laquelle de 5 à 65% des unités monomères de para-méthylstyrène contiennent un groupe mono-bromométhyle.

16. Composition selon la revendication, 15, dans laquelle ledit terpolymère a une teneur en brome comprise dans l'intervalle allant de 0,1 à 5% en moles.

17. Composition selon la revendication 1, comprenant en outre, comme charge, un noir de carbone de type pour renforcement.

18. Procédé de préparation d'une composition vulcanisée comprenant le chauffage de la composition de la revendication 1, mélangée avec de l'oxyde de zinc à une température et pendant une durée de temps suffisante pour durcir ladite composition.

19. Procédé de préparation d'une composition vulcanisée comprenant le chauffage de la composition de la revendication 11, mélangée avec de l'oxyde de zinc et un agent de durcissement pour ledit élastomère insaturé à une température et pendant une durée de temps suffisante pour durcir ladite composition.
